# EUROPEAN PATENT APPLICATION

(11) **EP 1 970 922 A1**
(43) Date of publication of application: **17.09.2008**
(21) Application number: 07104346.7
(22) Date of filing: 16.03.2007
(51) Int. Cl.: H01F 27/10, H02B 1/56, H02B 7/08

(54) **Cooling system**

(71) Applicant: ABB Technology AG, 8050 Zurich (CH)
(72) Inventor: Thrue, Carsten, 8740, Brædstrup (DK); Olsson, Carl-Olof, SE-722 14, Västerås (SE); Breder, Henrik, SE-723 47, Västerås (SE)

(57) **Abstract**

The present invention relates to a method for cooling a sealed a Compact Secondary Substation (CSS), which CSS contains at least one transformer, which transformer is connected to a high Voltage input, and which transformer is connected through a low voltage switch towards consumers, where the transformer is cooled by cooling means. It is the object of the invention to perform cooling of a CSS in a way that mostly isolates the inner volume of the CSS from atmospheric air. This object can be fulfilled if cooling is performed by a heat exchanger, in which heat exchanger a first primary medium is circulated, which first medium contains heat generated by the transformer, where the heat exchanger is cooled by heat conducting towards the surrounding environment. Hereby, direct contact to the atmospheric air is totally avoided. The inner of a CSS can by use of the heat exchanger be operating as a hermetic sealed closure. In this situation, the CSS can be more reliable equipment than CSS-units using traditional air cooling. As the heat exchanger as such can be a very small component, a CSS with the heat exchanger can have a much smaller volume than a typical air-cooled CSS.

## Description

### Field of the Invention

The present invention relates to a method for cooling a sealed Compact Secondary Substation (CSS), which CSS contains at least one transformer, which transformer is connected at one side with a high Voltage switch gear, and at the other side to a low voltage switch board, which low voltage switch board is connected towards consumers, where the transformer is cooled by cooling means.

### Background of the Invention

Cooling of a Compact Secondary Substation is typically done by air cooling. Air from the surroundings is circulated through the inner of the CSS, and inside the CSS, the transformer might be either oil-cooled or air-cooled. In the air-cooled transformer type, air can be blown directly towards and through cooling sections of the transformer. In oil-cooled transformers, the air will be circulated through an oil cooler operating as a kind of heat exchanger from the liquid oil towards the air. In any situation, the use of atmospheric air has the disadvantage that the air might contain dust or humidity which is then delivered directly into the inner of the CSS. As a natural protection, filters are widely used, but these filters have to be cleaned now and then, or in situations with a high number of insects in the air, the filters might be blocked for a few hours of operation, and for a CSS, the reduction in cooling can lead to a temperature increase inside the CSS and internal in the transformer which increasing temperature will lead to a shutdown situation.

CSS can be surface-mounted or a sub terrain CSS could be used. Both kinds of CSS-equipment are operating with air cooling.

### Object of the Invention

It is the object of the invention to perform cooling of a CSS in a way that mostly isolates the inner volume of the CSS from atmospheric air.

### Description of the Invention

The object can be fulfilled by a method as described in the preamble to claim 1, if cooling is performed by a heat exchanger, in which heat exchanger a first primary medium is circulated, which first medium contains heat generated by the transformer, where the heat exchanger is cooled by heat conducting towards the surrounding environment.

Hereby, direct contact to the atmospheric air is totally avoided. The inner of a CSS can by use of the heat exchanger be operating as a hermetic sealed closure. In this situation, the CSS can be more reliable equipment than CSS-units using traditional air cooling. As the heat exchanger as such can be a very small component, a CSS with the heat exchanger can have a much smaller volume than a typical air-cooled CSS.

In a preferred embodiment of the method, the heat exchanger transmits heat to the sub terrain around or below the CSS. Tubes can be buried around the CSS, or a single deep-drilled cooling pipe might be used for circulating a liquid which can form the secondary circuit in the heat exchanger. Hereby, the natural temperature difference towards the surrounding soil is used for transmitting heat towards the soil where the temperature difference is sufficient for transmitting heat from the liquid towards the soil.

The heat exchanger can be a liquid wherein both a primary and a secondary medium can be circulated in the heat exchanger, which secondary medium can be cooled by heat transmission through tubes or pipes towards the surrounding soil. By using a liquid/liquid heat exchanger, the size of the heat exchanger can be much reduced so that a very small heat exchanger has sufficient capacity for cooling the CSS.

In an alternative embodiment of the invention, the heat exchanger is an air-to-air heat exchanger where the primary medium is internal air in the CSS, which air is used for cooling the transformer, where the secondary medium is atmospheric air. By using an air-to-air heat exchanger, it is also possible to use all existing CSS-equipment with this invention. It is possible to have a CSS where for example the transformer is air-cooled, and with an air-to-air heat exchanger, the temperature for air cooling inside the CSS of the transformer can be reduced to a sufficient level, and the heat is transported outside the CSS by the heat exchanger, and maybe towards atmospheric air.

In a preferred embodiment of the invention, the heat exchanger can use insolating liquid from the transformer as primary medium in the heat exchanger. In heat exchangers used for liquid-to-liquid or liquid-to-air, it is possible internal in the CSS to use the insulating liquid from the transformer as the cooling medium in the primary site of the heat exchanger. In this way, an existing liquid circuit could be connected to the heat exchanger, and it should be possible to place this heat exchanger very close to the transformer, even in a way in which the amount of insulating liquid used in the transformer and in the heat exchanger is mostly the same as when not using the heat exchanger. The liquid amount in some heat exchangers is limited to a few litres. But an enormous amount of heat is exchanged if there is a sufficient flow through the heat exchanger.

The insolating liquid in the transformer and the heat exchanger can be self-circulating. By using the fact that heated oil might be searching upwards and cooled oil may be flowing downwards, it should be possible to place the heat exchanger in relation to the transformer so that self-circulation is sufficient for cooling internal in the CSS. The self-circulating system could be designed so that the flow velocity in the heat exchanger and in the transformer is depending on the temperature difference. This can lead to a situation in which the flow is increasing when a transformer is heating up. In this situation, it could be possible to regulate the secondary flow through the heat exchanger depending on the actual temperature of the liquid flowing from the transformer.

Instead the insolating liquid in the transformer and the heat exchanger can be circulated by pumping means. In situations where the heat exchanger cannot be placed optimal for natural self-circulation, it is also possible to use pumping means. Pumping means will also increase the flow velocity of a liquid and could be controlled so that the velocity of the liquid depends on the actual cooling demand.

It is preferred that the secondary medium can be circulated by pumping means towards tubes or pipes, which tubes or pipes can transmit heat towards the surrounding environment. Also, the secondary medium can be circulated by pumping means in order to achieve effective flow in tubes or pipes which might be relatively long, so some flow resistance exists in the circuit. Also, the pumping of the secondary medium could be controlled depending on the actual need for cooling.

The secondary medium can be refrigeration medium, which medium can be circulated by a compressor, where the secondary part of the heat exchanger operates as an evaporator, where tubes or pipes are forming a condenser, which condenser is transmitting heat towards the surrounding environment. Highly effective cooling can be achieved by using a refrigeration system. This system can operate in a way in which the refrigeration medium is evaporated in the heat exchanger where for example insulating liquid from the transformer is cooled highly effectively in the heat exchanger simply because the evaporating temperature might be several degrees below zero. It is possible to let the refrigerant have a high temperature just till the inlet of the heat exchanger where an expansion valve might be placed. By placing the expansion valve very close to the heat exchanger, it is possible to use a very small heat exchanger which has sufficient capacity for cooling the CSS.

In a preferred embodiment, the CSS can be placed as a sub terrain installation where the compressor is placed at the terrain surface. Hereby, it is possible to make service to the compressor because the compressor is placed probably in housing at the surface. Where the CSS could be placed just below in a sub terrain installation.

The secondary medium is a refrigeration medium, which medium is circulated by a compressor, where the secondary part of the heat exchanger operates as an evaporator, where the condensing heat is used for heating purposes. When using a refrigeration system, it is also possible to use the heat which is generated by compressing the refrigerant. The condensing means could be placed somewhere where the heat could be used for example for domestic heating. In that way, most of the heat which is generated in the transformer and in other parts of the CSS can be converted into an energy source which will be used for heating purposes. In the winter time, the heating could no doubt be used for normal domestic heating, and in the summer time, the heating could be used for producing hot water also for domestic use.

The heat exchanger can be a longitude tube placed as a sub terrain installation, in which tube the insolating liquid from the transformer is circulated. It is possible to use a longitude tube as a heat exchanger because the isolation liquid from the transformer is circulated inside this tube. In this way, a very efficient CSS special for the sub terrain can be achieved without any need for service at the surface.

### Description of the Drawing

Figure 1 shows a first embodiment of a sub terrain installation,
Figure 2 shows an installation where the transformer is placed as a sub terrain installation,
Figure 3 shows an embodiment where the CSS is placed as a sub terrain installation but where pump or compressor means are placed over the surface, and
Figure 4 shows an embodiment where the whole CSS is placed as a sub terrain installation where no parts are placed on the ground.

### Detailed Description of the Invention

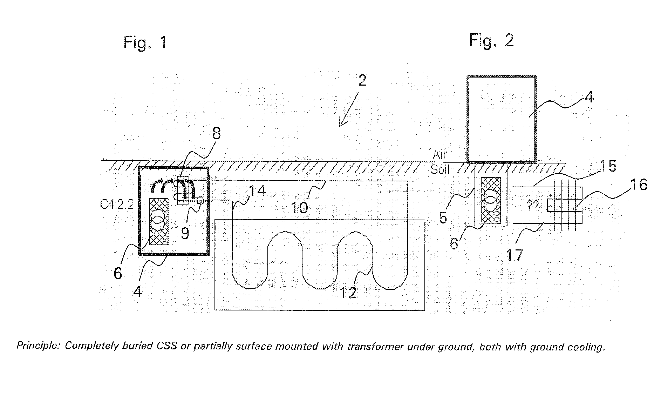

Figure 1 shows a CSS systems 2 placed as a sub terrain installation where a housing 4 shown as a subterrain installation comprises a transformer 6 and a heat exchanger 8. The heat exchanger has an outlet 10 connected to a sub terrain coil 12 from which there is a connection 14 back to the heat exchanger 8 through pumping means 9.

In operation, the transformer 6 will generate heat. This heat is transmitted towards the heat exchanger 8 where a liquid medium circulated in the line 10 transports the heat to the coil 12 where the heat is conducted to the surrounding soil. The now cooler medium is circulated to line 14 back towards the heat exchanger 8. A circulation pump 9 might be placed somewhere in the lines 10 or 14, but the circulating pump will probably be placed where it is easy to get access to power, i.e. inside the housing 4.

Figure 2 shows an alternative embodiment to the one shown in figure 1 where a housing 4 is placed on the ground, and where a transformer 6 is placed sub terrain in a housing 5. The transformer 6 is connected with a line 15, which line carries a cooling medium towards heat conductive means 16 and back towards the transformer through a line 17. The heat transmission means 16 could be heat conducting cooling plates surrounded by the soil. The housing 4 could comprise for example a ring main unit which could for example be gas insulated. Also, a low voltage switch board could be placed in the housing 4.

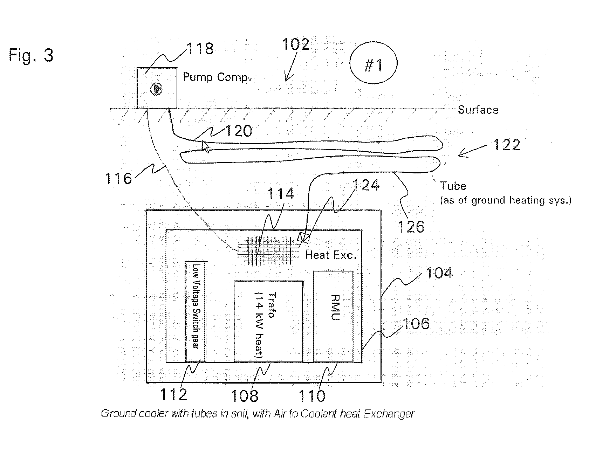

Figure 3 shows a sub-terrain CSS 102 placed in a cavity 104 in a housing 106. The housing 106 comprises a ring mounted unit 110, a transformer 108 and a low voltage switch gear 112. Above the transformer 108 is shown a heat exchanger 114. This heat exchanger 114 is connected to a pump or compressor 118 through a line 116. This pump or compressor 118 is placed over the ground surface. A line 120 is connecting the pump or compressor unit 118 to a ground heating system 122 which could be made of a curved tube placed in the area above or around the CSS. A line 126 is connected to the heat exchanger 114. The line 126 can comprise an expansion valve 124 near the heat exchanger 114.

In operation, the pump or compressor could be operating as a refrigerant system. A refrigerant can be circulating in the line 116, 120 and in the tubes 122 and the line 126 as secondary medium in the heat exchanger 114. This refrigerant is flowing through the line 116 towards the compressor where the pressure is increased. High pressure refrigerant is circulated through the line 120 and the ground heating system 122 and further through the line 126 towards the expansion valve 124 where the pressure is reduced which leads to a very low temperature in the heat exchanger 114. Hereby, the heat generators in the housing 106 will actively be transported towards the ground heating system 122.

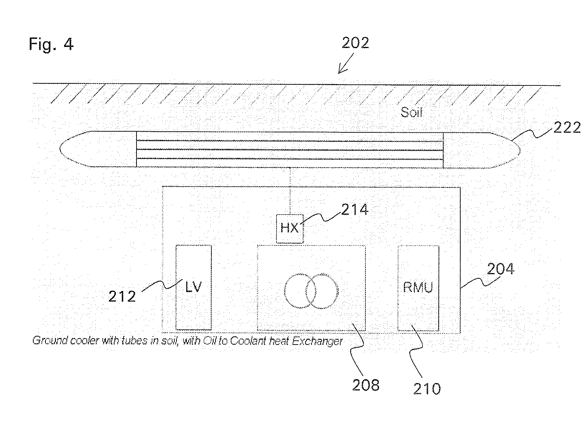

Figure 4 shows a hundred percent sub terrain embodiment of the invention where a system 202 is shown. This system comprises a sub terrain housing 204, which housing 204 comprises a transformer 208, a ring main unit 210 and a low voltage switch gear 212. Furthermore, a heat exchanger 214 is shown. This heat exchanger is cooperating with tube 222 placed above the housing 204 and surrounded by the soil.

In operation, the heat exchanger will transport the heat towards the tube 222 from where heat is transmitted into the soil. This can lead to a very stable CSS which is placed entirely under the surface level.

## Claims

1. Method for cooling a sealed Compact Secondary Substation (CSS) (2,102,202), which CSS (2,102,202) contains at least one transformer (6,108,208), which transformer (6,108,208) is connected at one side with a high Voltage switch gear (110,210), and at the other side to a low voltage switch board, which low voltage switch board (112,212) is connected towards consumers, where the transformer (6,108,208) is cooled by cooling means, **characterized in that** cooling is performed by a heat exchanger (8,104,214), in which heat exchanger (8,114,214) a first primary medium is circulated, which first medium contains heat generated by the transformer (6,108,208), where the heat exchanger (8,114,214) is cooled by heat conducting towards the surrounding environment.

2. Method for cooling a CSS according to claim 1, **characterized in that** the heat exchanger (8,114,214) transmits heat to the sub terrain around or below the CSS (2,102,202).

3. Method for cooling a CSS according to claim 1 or 2, **characterized in that** the heat exchanger (8,114,214) is a liquid/liquid heat exchanger, where both a primary and a secondary medium are circulated in the heat exchanger, which secondary medium is cooled by heat transmission through tubes or pipes towards the surrounding soil.

4. Method for cooling a CSS according to claim 1, **characterized in that** the heat exchanger (8,114,214) is an air-to-air heat exchanger (8,114,214), where the primary medium is internal air in the CSS (2,102,202), which air is used for cooling the transformer (6,108,208), where the secondary medium is atmospheric air.

5. Method for cooling a CSS according to claim 3, **characterized in that** the heat exchanger (8,114,214) is using insolating liquid from the transformer (6,108,208) as primary medium in the heat exchanger (8,114,214).

6. Method for cooling a CSS according to claim 4, **characterized in that** the insolating liquid in the transformer (6,108,208) and the heat exchanger (8,114,214) is self circulating.

7. Method for cooling a CSS according to claim 4, **characterized in that** the insolating liquid in the transformer (6,108,208) and the heat exchanger (8,114,214) is circulated by pumping means (9,118).

8. Method for cooling a CSS according to claim 3, **characterized in that** the secondary medium is circulated by pumping means (9,118) towards tubes or pipes (12,122,222), which is transmitting heat towards the surrounding environment.

9. Method for cooling a CSS according to claim 3, **characterized in that** the secondary medium is a refrigeration medium, which medium is circulated by a compressor (118), where the secondary part of the heat exchanger (8,114,214) operates as an evaporator, where tubes or pipes (12,122,222) are forming a condenser, which condenser is transmitting heat towards the surrounding environment.

10. Method for cooling a CSS according to claim 3, **characterized in that** the CSS (2,102,202) is placed as a sub terrain installation, where the compressor is placed at the terrain surface.

11. Method for cooling a CSS according to claim 9 or 10, **characterized in that** the secondary medium is a refrigeration medium, which medium is circulated by a compressor (118), where the secondary part of the heat exchanger (8,114,214) operates as an evaporator, where the condensing heat is used for heating purpose.

12. Method for cooling a CSS according to claim 2, **characterized in that** the heat exchanger (222) is a longitude tube placed as a sub terrain installation, in which tube (222) the insolating liquid from the transformer (208) is circulated.
